# EUROPÄISCHE PATENTSCHRIFT

(11) **EP 2 506 374 B1**
(45) Veröffentlichungstag und Bekanntmachung des Hinweises auf die Patenterteilung: **04.09.2019**
(21) Anmeldenummer: 12001537.5
(22) Anmeldetag: 06.03.2012
(51) Int. Cl.: H02G 3/04, B60L 53/31, B60L 53/66, B60L 53/30

(54) **Energiesäule zur Versorgung von Elektrofahrzeugen mit Energie**
Energy column for supplying electric vehicles with energy
Colonne d'énergie pour alimentation de véhicules électriques avec de l'énergie

(30) Priorität: 01.04.2011 DE 202011004734 U
(43) Veröffentlichungstag der Anmeldung: 03.10.2012
(73) Patentinhaber: Tehalit GmbH, 67716 Heltersberg (DE)
(72) Erfinder: Helfter, Marc, 67114 Eschau (FR); Kraemer, Jacques, 6700 Strasbourg (FR); Ostertag, Christian, 57720 Rimling (FR); Mattfeld, Thiemo, 66484 Winterbach (DE); Pfeifer, Christoph, 67707 Schopp (DE); Schmitt, Erwin, 67659 Kaiserslautern (DE)
(74) Vertreter: Nuss, Laurent

(56) Entgegenhaltungen:
- DE-A1- 4 213 405
- JP-A- 2010 283 946
- US-A1- 2010 013 434
- US-A1- 2010 296 230
- -: "Sitraffic Epos charging system- The smart electric vehicle charging solution", , 1. Oktober 2010 (2010-10-01), XP055341173, Gefunden im Internet: URL:https://www.siemens.com/press/pool/de/ events/corporate/2010-10-ecartec/epos_ws_e n.pdf [gefunden am 2017-02-01]
- -: "Rittal - eMobility Charging stations of the future", , 1. Mai 2010 (2010-05-01), XP055341170, Gefunden im Internet: URL:http://www.rittal.bg/pdf/Cataloges/Kom unikacionni sistemi/Rittal_eMobility.pdf [gefunden am 2017-02-01]

## Beschreibung

Die vorliegende Erfindung betrifft eine Energiesäule zur Versorgung von Elektrofahrzeugen mit Energie. Die Erfindung betrifft ferner eine Betankungseinrichtung zur Versorgung von Elektrofahrzeugen mit Energie, die aus mehreren erfindungsgemäßen Energiesäulen besteht.

Elektrofahrzeuge werden in den kommenden Jahren nicht zuletzt unter Umweltgesichtspunkten und wegen der drohenden Erdölknappheit eine immer bedeutendere Rolle spielen. Es ist davon auszugehen, dass die Verbrennungsmotoren nach und nach durch Elektromotoren ersetzt werden. Die mit elektrischer Energie angetriebenen Fahrzeuge werden bislang in Form von aufladbaren Akkumulatoren betrieben. Für die Betankung der Elektrofahrzeuge sind spezielle Ladestationen und eine daran angepasste Infrastruktur notwendig. Im Prinzip kann ein Elektrofahrzeug an einer herkömmlichen Steckdose, wie sie in jedem Haushalt vorhanden ist, aufgeladen werden. Die Zunahme der Zahl von Elektromobilen bringt es zwangsläufig mit sich, dass auch die Stromtankstellen zunehmen. Zunehmend werden auch Arbeitgeber, Gastronomiebetriebe, Supermärkte und Einzelhändler dazu übergehen, ihren Angestellten und Kunden spezielle Lademöglichkeiten für Elektrofahrzeuge anzubieten. Bei den bislang bekannten Stromtankstellen erfolgt die Aufladung entweder standardmäßig über das herkömmliche Stromnetz (ca. 3,5 kW) oder über Starkstromversorgung (10 kW).

Ladestationen für batteriebetriebene Elektromobile sind beispielsweise in der DE 2009 024 721 A1 beschrieben. Hierin wird eine dezentrale Stromversorgung von Elektrofahrzeugen aller Art im City- und Wohnbereich unter Einbeziehung der gegebenen Infrastruktur beschrieben. Über einen schwenkbaren Ladearm werden die Batterien des Elektrofahrzeugs mit Strom versorgt, ohne den Straßenverkehr oder die Passanten zu stören. Mehrere Batterieladestationen können einfach und schnell an die nächstgelegene Einspeisestelle mit einem Elektrokabel angeschlossen werden. Die Ladesäulen bzw. Ladestationen können im Stadtbereich entlang von Straßen oder Gehwegen oder auch Parkplätzen unterschiedlich ausgestaltet sein.

In der DE 10 2009 010 120 A1 wird eine Ladestation für ein Elektrofahrzeug beschrieben, das ein aufladbares Batteriesystem mit elektrischen Kontakten aufweist. Die Ladestation besteht aus einer Vorschubeinrichtung, durch deren Betätigung die elektrischen Kontakte der Ladestation mit den elektrischen Kontakten des Kraftfahrzeuges elektrisch verbindbar sind. Hierdurch erfolgt der Ladevorgang des Batteriesystems auf eine für den Fahrer bequeme Weise.

Die bislang bekannten Ladestationen oder Ladesäulen besitzen den Nachteil, dass die Ladeinfrastruktur zumeist vorgegeben ist. Bislang wurde in der Erde bei der Stromladestation eine Energieleitung zur Energieversorgung vergraben. Die einzelnen Ladestationen müssen diese Leitung anzapfen. Die Ladesäule wird an der so vorgegebenen Position fertig montiert, unabhängig davon, ob die Baustellenarbeiten abgeschlossen sind. Je nach Kundenwunsch, Anwendungsbereich und Infrastruktur sind jedoch unterschiedliche Ausgestaltungen der Ladesäulen erforderlich. Die bisher bekannten Lösungen sind in dieser Hinsicht unflexibel.

Vor diesem Hintergrund ist es Aufgabe der vorliegenden Erfindung, eine verbesserte, flexible Energiesäule anzugeben, bei der bei der Errichtung zunächst die Energieleitung angeschlossen und eine Grundstruktur erstellbar ist, während das Gehäuse der Ladestation erst nach Fertigstellung der Montagearbeiten in Anpassung an ihre Umgebung und das Anforderungsprofil montierbar ist.

Andere Ladestationen sind als technologischer Hintergrund aus US 2010/013434 A1, JP 2010283946 A, DE 42 13 405 A1, US 2010/296230 A1 sowie "Sitraffic Epos charging system- The smart electric vehicle charging solution", 1. Oktober 2010 und "Rittal - eMobility Charging stations of the future", 1. Mai 2010 bekannt.

Diese Aufgabe wird gelöst durch eine Energiesäule mit den Merkmalen des Anspruchs 1 sowie eine daraus bestehende Betankungseinrichtung mit den Merkmalen des Anspruchs 5.

Die erfindungsgemäße Energiesäule besteht aus drei unterschiedlichen Teilen. Die Erstellung der Grundstruktur an der Errichtungsstelle der Energiesäule (z.B. Stromtankstation, Supermarkt, Restaurant) erfolgt über einen Grundträger, der aus einem U-förmigen Kanalprofil mit einem darin integrierten Schaltkasten sowie Anschlüssen zum Anschluss von Energieleitungen und/oder Datenleitungen besteht. Der Schaltkasten enthält in einer Ausführungsform die zur Energieversorgung erforderlichen Versorgungseinrichtungen sowie Energie- und Datenleitungen. Ferner beinhaltet der Schaltkasten einen Energiezähler und Mittel zur Abrechnung der getankten Energiemenge. Der Grundträger umfasst ferner ein nach hinten versetztes Fußelement, um den Schwerpunkt des Grundträgers in der Vertikalachse zu stabilisieren. Dieser Grundträger wird an die vorhandenen Energie- und Datenleitungen angeschlossen und verbleibt in dieser Position. Erst später wird die Hülle darüber angeordnet.

Als weiteres Element kommt eine Adaptersäule zur Aufnahme und Befestigung des Grundträgers hinzu. Die Adaptersäule besteht aus Seitenteilen und einem Bodenstück, wobei im Bereich des Bodenstückes eine Ausnehmung zur Aufnahme des Fußelementes des Grundträgers ausgebildet ist. Auf den Grundträger und die Adaptersäule wird ein Gehäuse mit Seitenelementen, Deckplatte und einer Haube zur Abdeckung der Adaptersäule und des Grundträgers aufgebracht. Die Adaptersäule dient demnach zur Befestigung des Gehäuses an den Grundträger.

Der Grundträger, die Adaptersäule und das Gehäuse sind erfindungsgemäß ineinander montiert. Bei der Errichtung wird zunächst der Grundträger erstellt und die Energieleitungen angeschlossen. Erst nach Fertigstellung des gesamten Bauvorhabens erfolgt die Montage des Gehäuses mit der erfindungsgemäßen Adaptersäule.

Die Erfindung betrifft ferner eine Betankungseinrichtung zur Betankung von Elektrofahrzeugen mit Energie, wobei die Betankungseinrichtung mehrere erfindungsgemäße Energiesäulen umfasst. In vielen Anwendungsbereichen ist es nicht notwendig, dass jede einzelne Energiesäule mit einer eigenen Infrastruktur zur Abrechnung der getankten Energiemenge versehen ist. In sogenannten Master-/Slave-Installationen sind eine Mastersäule und mehrere Energiesäulen als Clients (Slave) vorgesehen. In der Mastersäule sind die entsprechenden Energie- und Datenverarbeitungseinrichtungen integriert, während bei den Slave-Säulen lediglich die Betankungsfunktionen vorhanden sind.

Die Erfindung wird in den nachfolgenden Zeichnungen näher erläutert. Es zeigen
- Fig. 1: eine Darstellung des erfindungsgemäßen Grundträgers und der Adaptersäule,
- Fig. 2: den Aufbau der erfindungsgemäßen Energiesäule in isometrischer Darstellung.

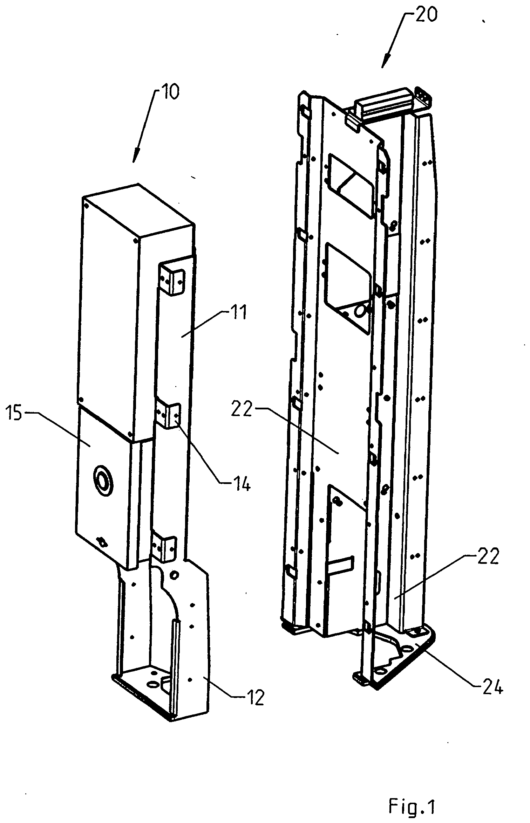

In Fig. 1 ist links der erfindungsgemäße Grundträger 10 zu erkennen. Dieser besteht aus einem U-förmigen Kanalprofil 11 mit einem darin integrierten Schaltkasten 15. Am Kanalprofil 11 sind Halterungen 14 zur Montage eines Gehäuses 30 vorgesehen. Das Fußelement 12 des Grundträgers 10 ist nach hinten versetzt, so dass der Grundträger 10 stabil steht.

Zur Befestigung des Gehäuses 30 ist eine Adaptersäule 20, bestehend aus Seitenteilen 22 und Bodenstück 24. Zur Aufnahme des Fußelementes 12 des Grundträgers 10 ist im Bereich des Bodenstückes 24 eine Ausnehmung vorgesehen.

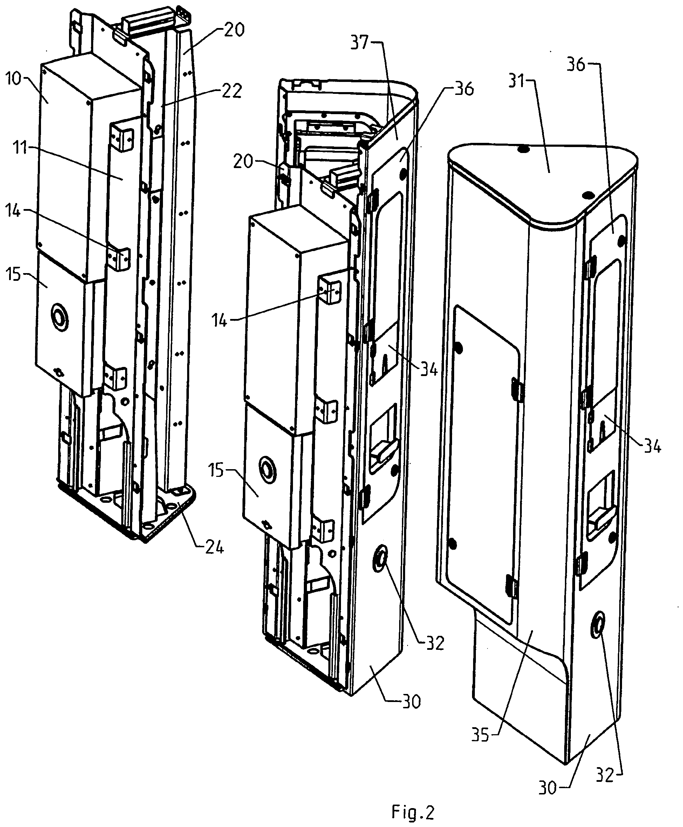

In Fig. 2 ist der weitere Aufbau der erfindungsgemäßen Energiesäule gezeigt. Der Grundträger 10 ist in die Adaptersäule 20 eingeschoben und an dieser befestigt (linke Darstellung). Auf die Adaptersäule 20 erfolgt die Montage des Gehäuses 30. Die Rückseite der Energiesäule wird über eine Haube 35 abgedeckt. Das Gehäuse 30 besteht aus Seitenelementen 37 mit Deckplatte 31 und Haube 35. An einem Display 36 können die Tankfunktionen angezeigt oder Tankkarten ausgelesen werden. Bedienelemente 32, 34 sind für das Starten des Tankvorgangs und zur Betankung vorgegeben. In der gezeigten Ausführungsform befindet sich hinter dem Bedienelement 34 eine Steckdose.

Die beschriebene Energiesäule kann autark betrieben werden. In einer besonders bevorzugten Konfiguration können mehrere Energiesäulen nach dem Master-/Slave-Prinzip miteinander gekoppelt sein, wobei wenigstens eine Energiesäule als Master und die weitere(n) Energiesäule(n) als Clients konfiguriert sind. Die Clients enthalten die Zapfelemente für die Betankung des Elektrofahrzeuges, während die Abrechnungssysteme sich in der Master-Säule befinden.

## Patentansprüche

1. Energiesäule zur Versorgung von Elektrofahrzeugen mit Energie, umfassend
- einen Grundträger (10), bestehend aus
- einem U-förmigen Kanalprofil (11) mit einem darin integrierten Schaltkasten (15),
- Anschlüssen zum Anschluss von Energieleitungen und/oder Datenleitungen,
- einem nach hinten, bezogen auf das U-förmige Kanalprofil (11), wobei die Öffnung des U-förmigen Kanalprofils (11) vorne liegt, versetzten Fußelement (12), so dass der Grundträger (10) stabil steht,
- ein Gehäuse (30) mit Seitenelementen (37), Deckplatte (31) und Haube (35) zur Abdeckung eine Adaptersäule (20) und des Grundträgers (10),
- die Adaptersäule (20) mit Seitenteilen (22) und einem Bodenstück (24), wobei im Bereich des Bodenstückes (24) eine Ausnehmung zur Aufnahme des Fußelementes (12) des Grundträgers (10) ausgebildet ist, und wobei die Adaptersäule (20) zur Aufnahme und Befestigung des Grundträgers (10) ausgelegt ist und zur Befestigung des Gehäuses (30) am Grundträger (10) dient, wobei der Grundträger (10), die Adaptersäule (20) und das Gehäuse (30) ineinander montiert sind, wobei der Grundträger (10) in die Adaptersäule (20) eingeschoben und an dieser befestigt wird.

2. Energiesäule nach Anspruch 1, **dadurch gekennzeichnet, dass** die Haube (35) zur Rückseite gegenüber dem Fußteil des Gehäuses (30) erweitert ist.

3. Energiesäule nach einem der Ansprüche 1 bis 2, **dadurch gekennzeichnet, dass** die Haube (35) über Haltungen (14) an dem Grundträger (10) befestigt ist.

4. Energiesäule nach einem der Ansprüche 1 bis 3, **dadurch gekennzeichnet, dass** am Gehäuse (30) Bedienelemente (32, 34) zur Betankung und/oder zum Auslesen einer Tankkarte integriert sind.

5. Betankungseinrichtung zur Versorgung von Elektrofahrzeugen mit Energie, **dadurch gekennzeichnet, dass** die Betankungseinrichtung mehrere Energiesäulen nach einem der Ansprüche 1 bis 4 umfasst.

6. Betankungseinrichtung nach Anspruch 5, **dadurch gekennzeichnet, dass** die Energiesäulen nach dem Master/Slave-Prinzip miteinander gekoppelt sind, wobei wenigstens eine Energiesäule als Master und die weiteren Energiesäulen als Clients konfiguriert sind.

## Claims

1. Energy column for supplying electric vehicles with energy, comprising:
- a support (10) comprising
- a U-shaped channel section (11) with a control box (15) integrated therein,
- terminals for the connection of energy lines and/or data lines,
- a base element (12) offset relative to the U-shaped channel section (11), the opening of the U-shaped channel section (11) being located at the front, so that the support (10) stands stably,
- a housing (30) having side elements (37), cover plate (31) and hood (35) for covering an adapter column (20) and the support (10),
- the adapter column (20) having side parts (22) and a base piece (24), a recess for receiving the base element (12) of the support (10) being formed in the region of the base piece (24), and the adapter column (20) being designed to receive and secure the support (10) and being used to secure the housing (30) to the support (10), the support (10), the adapter column (20) and the housing (30) being mounted in one another, the support (10) being inserted into the adapter column (20) and secured to the latter.

2. Energy column according to Claim 1, **characterized in that** the hood (35) is widened towards the rear with respect to the base part of the housing (30).

3. Energy column according to one of Claims 1 to 2, **characterized in that** the hood (35) is secured to the support (10) via mountings (14).

4. Energy column according to one of Claims 1 to 3, **characterized in that** operating elements (32, 34) for refuelling and/or for reading a fuel card are integrated on the housing (30).

5. Refuelling apparatus for supplying electric vehicles with energy, **characterized in that** the refuelling apparatus comprises multiple energy columns according to one of Claims 1 to 4.

6. Refuelling apparatus according to Claim 5, **characterized in that** the energy columns are coupled to one another in accordance with the master/slave principle, at least one energy column being configured as master and the further energy columns as clients.

## Revendications

1. Colonne d'énergie pour l'alimentation en énergie de véhicules électriques, comprenant
- un support de base (10), constitué
- d'un profilé de canalisation en U (11) dans lequel un coffret électrique (15) est intégré,
- de connexions pour la connexion de lignes d'énergie et/ou de données,
- d'un élément de pied (12) décalé vers l'arrière par rapport au profilé de canalisation en U (11), l'ouverture du profilé de canalisation en U (11) étant à l'avant, afin que le support de base (10) tienne debout de façon stable,
- un boîtier (30) avec des éléments latéraux (37), une plaque de recouvrement (31) et un capot (35) pour recouvrir une colonne d'adaptation (20) et le support de base (10),
- la colonne d'adaptation (20) avec des parties latérales (22) et une pièce de fond (24), un évidement destiné à recevoir l'élément de pied (12) du support de base (10) étant formé dans la zone de la pièce de fond (24), et la colonne d'adaptation (20) étant conçue pour recevoir et fixer le support de base (10) et servant à fixer le boîtier (30) au support de base (10), le support de base (10), la colonne d'adaptation (20) et le boîtier (30) étant montés l'un dans l'autre, le support de base (10) étant introduit dans la colonne d'adaptation (20) et fixé à celle-ci.

2. Colonne d'énergie selon la revendication 1, **caractérisée en ce que** le capot (35) est élargi vers l'arrière par rapport à la partie pied du boîtier (30).

3. Colonne d'énergie selon l'une des revendications 1 à 2, **caractérisée en ce que** le capot (35) est fixé au support de base (10) par des attaches (14).

4. Colonne d'énergie selon l'une des revendications 1 à 3, **caractérisée en ce que** des éléments de commande (32, 34) pour la distribution d'énergie et/ou la lecture d'une carte de distribution d'énergie sont intégrés sur le boîtier (30).

5. Dispositif de distribution d'énergie pour l'alimentation en énergie de véhicules électriques, **caractérisé en ce que** le dispositif de distribution d'énergie comprend plusieurs colonnes d'énergie selon l'une des revendications 1 à 4.

6. Dispositif de distribution d'énergie selon la revendication 5, **caractérisé en ce que** les colonnes d'énergie sont couplées les unes aux autres selon le principe maître/esclave, au moins une colonne d'énergie étant configurée comme maître et les autres colonnes d'énergie comme clients.
